# EUROPEAN PATENT SPECIFICATION

(11) **EP 3 407 406 B1**
(45) Date of publication and mention of the grant of the patent: **26.02.2020**
(21) Application number: 18171700.0
(22) Date of filing: 10.05.2018
(51) Int. Cl.: H01M 4/13, H01M 4/66, H01M 10/05

(54) **ELECTRODE CURRENT COLLECTOR AND ALL-SOLID-STATE BATTERY**
ELEKTRODENSTROMABNEHMER UND FESTSTOFFBATTERIE
COLLECTEUR DE COURANT D'ÉLECTRODE ET BATTERIE À ÉLECTROLYTE SOLIDE

(30) Priority: 26.05.2017 JP 2017104485
(43) Date of publication of application: 28.11.2018
(73) Proprietor: Toyota Jidosha Kabushiki Kaisha, Aichi-Ken 471-8571 (JP)
(72) Inventor: MATSUSHITA, Yuki, Aichi-ken,, 471-8571 (JP); HASEGAWA, Hajime, Aichi-ken,, 471-8571 (JP); UCHIYAMA, Takayuki, Aichi-ken,, 471-8571 (JP); KATO, Dai, Aichi-ken,, 471-8571 (JP)
(74) Representative: J A Kemp LLP

(56) References cited:
- EP-A1- 0 851 525
- EP-A1- 2 874 213
- WO-A1-2005/050772
- JP-A- H11 144 704
- US-A1- 2016 197 351
- US-A1- 2017 207 440

## Description

### Technical Field

The present disclosure relates to an electrode current collector used in an all-solid-state battery.

### Background Art

An all-solid-state battery is a battery including a solid electrolyte layer between a cathode active material layer and an anode active material layer, and one of the advantages thereof is that the simplification of a safety device may be more easily achieved compared to a liquid-based battery including a liquid electrolyte containing a flammable organic solvent. There have been studies focusing on a current collector used in an all-solid-state battery. For example, Japanese Patent Application Laid-Open (JP-A) No. 2015-005421 discloses an electrode body comprising a current collector containing Cu and/or Fe, an anode layer containing a sulfide solid electrolyte and an anode active material, and a conductive film arranged between the current collector and the anode layer.

JP-A No. 2000-156328 discloses a method for producing a current collector used for a capacitor or a battery, the method comprising conducing a heat treatment to the current collector formed of a conductive material, and forming an oxide film on the surface of the current collector. JP-A No. 2000-048822 discloses a lithium secondary battery using a current collector characterized in that a surface of at least one of an electrode plate for cathode and an electrode plate for anode is subjected to a boehmite treatment. JP-A No. 2015-111554 discloses a carbon coating layer arranged on a current collector of a lithium ion secondary battery, the carbon coating layer including a material that generates gas at a high temperature exceeding an operating temperature.

EP 2,874,213 discloses a current collector which has a PTC layer having room for thermal expansion at elevated temperature while securing sufficient conductivity at normal temperature. The current collector comprises a conductive base material, and a resin layer formed on at least one surface of the conductive base material is provided. The resin layer contains an organic resin and conductive particles. A deposition amount of the resin layer on the conductive base material is 0.5 to 20 g/m². Rz (ten point average roughness) of the surface of the resin layer is 0.4 to 10 µm. Sm (average spacing of ruggedness) of the surface of the resin layer is 5 to 200 µm. An average of resistance of the resin layer measured by the two-terminal method is 0.5 to 50 Ohm.

US 2016/197351A discloses an all-solid-state secondary battery, wherein: an anode current collector that contains copper or copper alloy; a cathode current collector comprising aluminum, aluminum alloy or stainless steel, provided opposite to the anode current collector; an anode active material layer formed there between from the anode current collector side on the surface of the anode current collector; a solid electrolyte layer comprising a sulfide solid electrolyte that contains a monovalent or divalent metal and sulfur; and a cathode active material layer formed on the surface of the cathode current collector are layered successively. A sulfidation resistant layer is formed on the surface of the anode current collector on which the anode active material layer is formed.

EP 0,851,525A discloses an organic electrolyte battery, in which resistor layers having higher resisting values than those of electric conducting substrates retaining active material of an electrode are formed on the substrate surfaces.

### Summary of Disclosure

### Technical Problem

A nail penetration test has been known as a method of evaluating the safety of all solid batteries. The nail penetration test is a test in which a conductive nail is penetrated through an all-solid-state battery to observe changes (such as a change in temperature) when an internal short circuit occurs inside the battery. When a cathode current collector contacts with an anode current collector in the nail penetration test, Joule heat is generated since short circuit part resistance (short circuit resistance) is small, and there is a risk that the battery temperature may rise.

Then, the inventors of the present disclosure have tried to form a resistive layer with high electron resistance on at least one surface of the cathode current collector and the anode current collector. When the inventors conducted a nail penetration test to an all-solid-state battery with the resistive layer, it was confirmed that the generation of Joule heat was suppressed since the short circuit resistance increased. Meanwhile, a new problem raised was that the battery resistance during its normal usage also increased due to the presence of the resistive layer.

The present disclosure has been made in view of the above circumstances, and a main object thereof is to provide an electrode current collector that allows the short circuit resistance of an all-solid-state battery to increase and also allows the battery resistance during normal use of the battery to be reduced.

### Solution to Problem

In order disclosure provides an electrode current collector to be to achieve the object, the present used in an all-solid-state battery, the electrode current collector comprising: a current collecting layer, a resistive layer, and a coating layer in this order; an electron conductivity of the coating layer is 2 × 10⁻² S/cm or more; the resistive layer includes an opening; and the current collecting layer contacts with the coating layer in the opening.

According to the present disclosure, inclusion of the resistive layer allows the short circuit resistance of the all-solid-state battery to increase. Further, since the current collecting layer contacts with the coating layer in the opening of the resistive layer, the battery resistance during normal use of the battery may be reduced.

In the disclosure, a thickness of the resistive layer may be in a range of 10 nm to 1000 nm.

In the disclosure, the coating layer may contain a carbon material as a conductive material.

In the disclosure, the coating layer may further contain a resin and an inorganic filler.

In the disclosure, a proportion of the conductive material in the coating layer may be 30 weight% or less.

In the disclosure, a thickness of the coating layer may be larger than a thickness of the resistive layer.

In the disclosure, the resistive layer may contain a metal oxide.

In the disclosure, the resistive layer and the current collecting layer may contain a same metal element.

In the disclosure, the current collecting layer may contain an Al element.

Also, the present disclosure provides an all-solid-state battery comprising: a cathode current collector, a cathode active material layer, a solid electrolyte layer, an anode active material layer, and an anode current collector in this order; characterized in that at least one of the cathode current collector and the anode current collector is the above described electrode current collector.

According to the present disclosure, usage of the above described electrode current collector allows an all-solid-state battery to have high short circuit resistance and low battery resistance during the normal use of the battery.

### Advantageous Effects of Disclosure

The electrode current collector of the present disclosure exhibits effects of both increasing the short circuit resistance of an all-solid-state battery and reducing the battery resistance during the normal use of the battery.

### Brief Description of Drawings

FIGS. 1A and 1B are schematic cross-sectional views exemplifying the electrode current collector of the present disclosure.
FIGS. 2A and 2B are schematic cross-sectional views explaining a nail penetration test.
FIGS. 3A and 3B are schematic cross-sectional views explaining the effect of the present disclosure.
FIG. 4 is a schematic cross-sectional view illustrating an example of the all-solid-state battery of the present disclosure.
FIGS. 5A to 5E are schematic cross-sectional views explaining the method for producing an evaluation battery.
FIGS. 6A to 6D are the observation results of Al foils used in Comparative Examples 1 to 5 and Examples 1 to 3.
FIG. 7 is a graph showing the relation between the boehmite treatment time and the battery resistance ratio.
FIG. 8 is a graph exemplifying a voltage profile in a nail penetration test.
FIG. 9 is a graph showing the relation between the boehmite treatment time and the short circuit resistance ratio.
FIG. 10 is a schematic cross-sectional view explaining the method of a contact resistance test.
FIG. 11 is a graph showing the result of the contact resistance test.

### Description of Embodiments

The electrode current collector and the all-solid-state battery of the present disclosure are hereinafter described in details.

### A. Electrode current collector

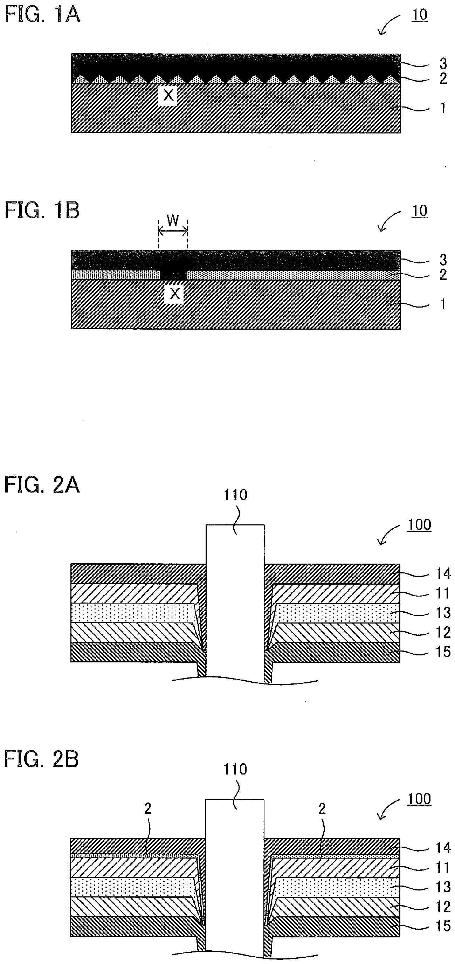

FIGS. 1A and 1B are schematic cross-sectional views exemplifying the electrode current collector of the present disclosure. Electrode current collector 10 illustrated in FIG. 1A comprises current collecting layer 1, resistive layer 2, and coating layer 3, in this order. Further, coating layer 3 has a specific electron conductivity, resistive layer 2 includes opening X, and current collecting layer 1 contacts with coating layer 3 in opening X. For example, opening X illustrated in FIG. 1A may be obtained by conducting an oxidation treatment to a surface of current collecting layer 1 and forming resistive layer 2 (an oxide film). Incidentally, in a typical oxide film, a sparse region and a dense region coexist. Minute opening X will be formed in a part of the sparse region.

On the other hand, electrode current collector 10 illustrated in FIG. 1B comprises current collecting layer 1, resistive layer 2, and coating layer 3, in this order. Further, coating layer 3 has a specific electron conductivity, resistive layer 2 includes opening X, and current collecting layer 1 contacts with coating layer 3 in opening X. For example, opening X illustrated in FIG. 1B may be obtained by forming pattern-shaped resistive layer 2 on a surface of current collecting layer 1.

According to the present disclosure, inclusion of the resistive layer allows the short circuit resistance of the all-solid-state battery to increase. Further, since the current collecting layer contacts with the coating layer in the opening of the resistive layer, the battery resistance during the normal use of the battery may be reduced. In this manner, both of increasing the short circuit resistance of the all-solid-state battery and reducing the battery resistance during the normal use of the battery may be achieved.

Here, the nail penetration test is described with reference to FIGS. 2A and 2B. For example, as illustrated in FIG. 2A, in a nail penetration test, changes (such as a change in temperature) when internal short circuit occurs in a battery is observed by penetrating nail 110 to all-solid-state battery 100. Cathode current collector 14 and anode current collector 15 are the members with low resistance due to their function; thus, when cathode current collector 14 contacts with anode current collector 15 upon the nail penetration, the short circuit resistance is also reduced. As the result, Joule heat is generated and there is a risk that the battery temperature may rise. Then, for example, as illustrated in FIG. 2B, the inventors of the present disclosure have tried to form resistive layer 2 with high resistance on a surface of cathode current collector 14. The short circuit resistance was increased by forming resistive layer 2, and the generation of Joule heat was suppressed.

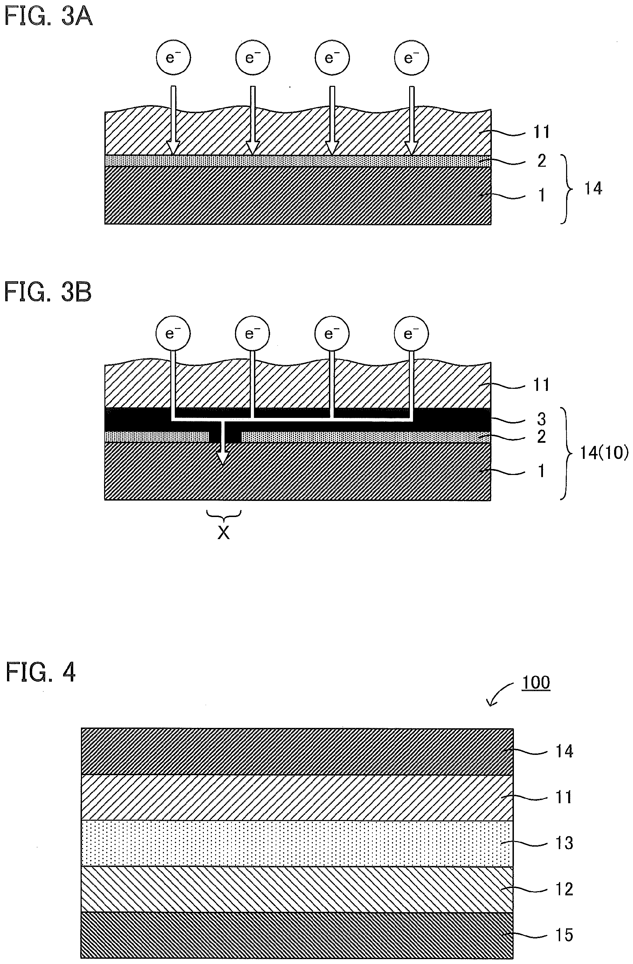

Meanwhile, a new problem raised was that the battery resistance during the normal use of the battery also increased due to the presence of the resistive layer. For example, as illustrated in FIG. 3A, electrons (e⁻) flow from cathode active material layer 11 to cathode current collector 14 during discharge; however, since the resistance of resistive layer 2 is high, the battery resistance during the normal use of the battery also increases. On the other hand, for example, the resistance of resistive layer 2 decreases if the thickness of resistive layer 2 is reduced; however, in that case, the effect of increasing the short circuit resistance of the all-solid-state battery may not be sufficiently obtained. In this manner, it is difficult to achieve both of increasing the short circuit resistance of an all-solid-state battery and reducing the battery resistance during the normal use of the battery by just arranging the resistive layer.

In contrast, for example, as illustrated in FIG. 3B, electrode current collector 10 of the present disclosure comprises resistive layer 2, and further, current collecting layer 1 contacts with coating layer 3 in opening X of resistive layer 2; thus, both of increasing the shot circuit resistance of the all-solid-state battery and reducing the battery resistance during the normal use of the battery may be achieved. In specific, electrons (e⁻) flow from cathode active material layer 11 to cathode current collector 14 via coating layer 3 having high electron conductivity during discharge. Accordingly, the battery resistance during the normal use of the battery may be reduced. Meanwhile, during the nail penetration, since not only coating layer 3 but also resistive layer 2 contact with the anode current collector (not illustrated),the short circuit resistance of the all-solid-state battery may be increased. In particular, when the proportion of a conductive material included in coating layer 3 is small (such as 30 weight% or less), the contact resistance of coating layer 3 with the anode current collector (not illustrated) increases, and thus the short circuit resistance of the all-solid-state battery may be increased. Incidentally, in FIG. 3B, the effect is explained using electrode current collector 10 exemplified in FIG. 1B; however, the similar effect thereto may be obtained with electrode current collector 10 illustrated in FIG. 1A.

Also, in a typical all-solid-state battery, since all the constituent members are solid, the pressure applied to the all-solid-state battery during the nail penetration test becomes extremely high. For example, in the part a nail penetrates, a high pressure of 100 MPa or more is applied; in particular, a high pressure of 400 MPa or more is applied at the tip of the nail. Accordingly, the contact resistance in a high pressure state is important. On the other hand, in a liquid-based battery, since there are spaces to which a liquid electrolyte permeates, the pressure applied to the battery during the nail penetration test dramatically decreases. In other words, it is difficult to reach at an idea of the contact resistance in a high pressure state based on the technique of liquid-based batteries.

The electrode current collector of the present disclosure is hereinafter described in each constitution.

### 1. Current collecting layer

The current collecting layer is a layer that has the main function (current collecting function) of a current collector. The current collecting layer is preferably a metal current collecting layer. There is no limitation on the metal element included in the metal current collecting layer, and examples thereof may include an Al element, a Cu element, an Fe element, a Ti element, a Ni element, a Zn element, a Cr element, a Co element, a Au element, and a Pt element. The metal current collecting layer may be a simple substance of the metal element, and may be an alloy that contains the metal element as a main component. An example of an Fe alloy is stainless steel (SUS), and SUS304 is preferable.

Examples of the shape of the current collecting layer may include a foil shape. The thickness of the current collecting layer is, for example, 0.1 µm or more, and may be 1 µm or more. If the current collecting layer is too thin, the current collecting function may be degraded. Meanwhile, the thickness of the current collecting layer is, for example, 1 mm or less, and may be 100 µm or less. If the current collecting layer is too thick, the energy density of the all-solid-state battery may be degraded.

### 2. Resistive layer

The resistive layer is a layer formed between the current collecting layer and the coating layer, and the resistance thereof is usually higher than that of the current collecting layer. Also, the resistive layer usually includes an insulating material. Examples of the insulating material may include inorganic materials such as a metal oxide and a fluorine compound. Examples of the metal element included in the metal oxide may include an Al element, a Cu element, an Fe element, a Ti element, a Ni element, a Zn element, a Cr element, and a Co element. Also, organic materials such as polyimide may be used as the insulating material.

The resistive layer and the current collecting layer may or may not contain the same metal element, but the former is preferable since the adhesion is high. For example, when a resistive layer (an oxide film) is formed by conducting an oxidation treatment to a surface of the current collecting layer, the resistive layer (an oxide film) including the same metal element as that of the current collecting layer may be obtained.

An example of the oxidation treatment is a liquid phase oxidation treatment. Examples of the liquid phase oxidation treatment may include a boehmite treatment. The boehmite treatment is a method to form an oxide film on a surface of aluminum in an aqueous solution at a high temperature. An additional example of the oxidation treatment may include an anodic oxidation treatment. The anodic oxidation treatment is a treatment utilizing the electrochemical oxidation in an anode. Examples of the anodic oxidation treatment may include an alumite treatment. Also, an additional example of the oxidation treatment may include a gas phase oxidation treatment, and a typical example thereof is a heat treatment in the atmosphere.

The thickness of the resistive layer is, for example, 10 nm or more, may be 30 nm or more, may be 70 nm or more, and may be 100 nm or more. If the resistive layer is too thin, the short circuit resistance may not be efficiently improved. Meanwhile, the thickness of the resistive layer is, for example, 1000 nm or less, may be 300 nm or less, and may be 130 nm or less.

The surface roughness R of the resistive layer is, for example, 20 nm or more, may be 25 nm or more, and may be 30 nm or more. When the surface roughness Ra of the resistive layer is the specific value or more, for example, the coating layer bites into the concave part of the resistive layer due to at least one of the pressing pressure during the production of the battery and the confining pressure of the all-solid-state battery; thus, the state in which the coating layer contacts with the current colleting layer may be obtained. Meanwhile, the surface roughness Ra of the resistive layer is, for example, 200 nm or less, and may be 50 nm or less.

Also, as exemplified in FIGS. 1A and 1B, usually, current collecting layer 1 contacts with coating layer 3 in opening X of resistive layer 2. For example, as illustrated in FIG. 1B, the width W of opening X is in a range of 0.1 µm to 10 µm, and may be in a range of 0.5 µm to 8 µm. Also, the area rate (total area of the opening / (total area of the opening + non-opening part)) of opening X is, for example, in a range of 0.1% to 2%, and may be in a range of 0.5% to 1%. Also, there are no limitations on the shape of the opening in planner view, and examples thereof may include a random shape, a stripe shape, and a dot shape.

There are no particular limitations on the method for forming the resistive layer, and examples thereof may include the above described oxidation treatments. Also, the resistive layer may be formed by applying a paste that contains the above described insulating material (or the precursor thereof). There are no particular limitations on the method for applying the paste, and general application methods may be exemplified. Also, the paste applied may be dried as required.

### 3. Coating layer

The coating layer in the present disclosure is a layer of which electron conductivity is 2 × 10⁻² S/cm or more. If the electron conductivity is less than 2 × 10⁻² S/cm, it is difficult to make a practical all sold battery. The electron conductivity of the coating layer is preferably in a range of 3 × 10⁻² S/cm to 50 S/cm. Also, the electron conductivity of the coating layer is preferably lower than the electron conductivity of the current collecting layer. Incidentally, the electron conductivity refers to the electron conductivity at 25°C. Also, it is preferable that the coating layer has higher resistance than that of the current collecting layer.

The coating layer usually contains at least a conductive material. Examples of the conductive material may include carbon materials and metal materials, and carbon materials are preferable. Examples of the carbon material may include carbon black such as furnace black, acetylene black, Ketjen black, and thermal black; carbon fiber such as carbon nanotube and carbon nanofiber; activated carbon; carbon; graphite; graphene, and fullerene. Examples of the shape of the conductive material may include a granular shape. The proportion of the conductive material in the coating layer is, for example, preferably in a range of 5 volume% to 90 volume%.

The coating layer may further contain a resin in addition to the conductive material. Examples of the resin may include a thermoplastic resin. Examples of the thermoplastic resin may include polyvinylidene fluoride (PVDF), polypropylene, polyethylene, polyvinyl chloride, polystyrene, an acrylonitrile butadiene styrene (ABS) resin, a methacryl resin, polyamide, polyester, polycarbonate, and polyacetal. Also, as the resin, a rubber such as SBR (styrene butadiene rubber), ABR (acrylonitrile butadiene rubber), and BR (butylene rubber) may be used. The melting point of the resin is, for example, in a range of 80°C to 300°C. The proportion of the conductive material in the coating layer is, for example, preferably in a range of 5 volume% to 90 volume%.

The coating layer may or may not contain an inorganic filler in addition to the conductive material. In the latter case, the coating layer with high electron conductivity may be obtained, and in the former case, the coating layer having PTC properties may be obtained. PTC stands for Positive Temperature Coefficient, which refers to the property the resistance changes to have a positive coefficient along with the temperature rise. Here, the resin included in the coating layer is expanded in volume along with the temperature rise, which may cause the coating layer to increase. However, in an all-solid-state battery, since confining pressure is usually applied to the thickness direction, the resin changes its form or flows due to the effect of the confining pressure, the PTC properties may not be efficiently exhibited. In contrast, the addition of a hard inorganic filler to the coating layer allows the PTC property to be favorably exhibited even under the effect of the confining pressure. The confining pressure is, for example, 0.1 MPa or more, may be 1 MPa or more, and may be 5 MPa or more. Meanwhile, the confining pressure is, for example, 100 MPa or less, may be 50 MPa or less, and may be 20 MPa or less.

Examples of the inorganic filler may include metal oxides ad metal nitrides. Examples of the metal oxide may include alumna, zirconia, and silica. Examples of the metal nitride may include silicon nitride. The average particle size (D₅₀) of the inorganic filler is, for example, in a range of 50 nm to 5 µm, and may be in a range of 100 nm to 2 µm. Also, the content of the inorganic filler in the coating layer is, for example, 50 volume% or more, and may be 60 volume% or more. Meanwhile, the content of the inorganic filler in the coating layer is, for example, 85 volume% or less, and may be 80 volume% or less.

From the view point of increasing the contact resistance of the coating layer with the facing current collecting layer in the electrode current collector of the present disclosure, the proportion of the conductive material in the coating layer is preferably small. The proportion of the conductive material in the coating layer is, for example, 30 weight% or less, may be 20 weight% or less, and may be 10 weight% or less.

The thickness of the coating layer is, for example, 0.01 µm or more, and preferably 1 µm or more. If the coating layer is too thin, the battery resistance during the normal use of the battery may not possibly be reduced. Meanwhile, the thickness of the coating layer is, for example, 30 µm or less. If the coating layer is too thick, the energy density of the all-solid-state battery may possibly be degraded. Also, the thickness of the coating layer is preferably larger than the thickness of the resistive layer. The reason therefor is to smoothen the movement of the electrons in the coating layer and in the current collecting layer. When the thickness of the coating layer is regarded as T_{C} and the thickness of the resistive layer is regarded as T_{R}, the ratio of the thickness of the coating layer to the thickness of the resistive layer (T_{C}/T_{R}) is, for example, in a range of 6 to 300, and may be in a range of 10 to 200.

There are no particular limitations on the method for forming the coating layer, and examples thereof may include a method of applying a paste including a conductive material and a resin. The paste may further contain an inorganic filler. There are no particular limitations on the method for applying the paste, and general application methods may be exemplified. Also, the applied paste may be dried as required.

### 4. Electrode current collector

The electrode current collector of the present disclosure comprises the above described current collecting layer, resistive layer, and coating layer. The electrode current collector is, usually, arranged in a manner that the surface of the coating layer side faces the solid electrolyte layer. Also, the electrode current collector is usually used in an all-solid-state battery. The electrode current collector may be a cathode current collector, and may be an anode current collector.

There are no particular limitations on the method for producing the electrode current collector, and examples thereof may include the method comprising a current collecting layer preparing step of preparing a current collecting layer, a resistive layer forming step of oxidizing a surface of the current collecting layer to form a resistive layer, and a coating layer forming step of forming a coating layer on the opposite surface to the current collecting layer in the resistive layer. Incidentally, the resistive layer forming step and the coating layer forming step are in the same contents as those described above (method for forming resistive layer and method for forming coating layer).

### B. All-solid-state battery

FIG. 4 is a schematic cross-sectional view illustrating an example of the all-solid-state battery of the present disclosure. All-solid-state battery 100 illustrated in FIG. 4 comprises cathode active material layer 11 including a cathode active material, anode active material layer 12 including an anode active material, solid electrolyte layer 13 formed between cathode active material layer 11 and anode active material layer 12, cathode current collector 14 for collecting currents of cathode active material layer 11, and anode current collector 15 for collecting currents of anode active material layer 12. In other words, all-solid-state battery 100 comprises cathode current collector 14, cathode active material layer 11, solid electrolyte layer 13, anode active material layer 12, and anode current collector 14, in this order in the thickness direction. The present disclosure features a configuration in which at least one of cathode current collector 14 and anode current collector 15 is the above described electrode current collector.

According to the present disclosure, usage of the above described electrode current collector allows an all-solid-state battery to have high short circuit resistance and low battery resistance during the normal use of the battery.

### 1. Cathode current collector and anode current collector

At least one of the cathode current collector and the anode current collector is the electrode current collector described in "A. Electrode current collector" above. Only the cathode current collector may be the above described electrode current collector, and only the anode current collector may be the above described electrode current collector. Also, both of the cathode current collector and the anode current collector may be the above described electrode current collector. In this case, the current collecting layer of the cathode current collector and the current collecting layer of the anode current collector may contain the same metal element, and may contain a different metal element respectively.

Also, the contact resistance of the cathode current collector and the anode current collector is preferably high, even in a high pressure state. Incidentally, "the contact resistance of the cathode current collector and the anode current collector" is defined as follows. When one of the cathode current collector and the anode current collector is the above described electrode current collector, "the contact resistance of the cathode current collector and the anode current collector" refers to the resistance when the coating layer of the electrode current collector is made contact with the other current collector. Meanwhile, when both of the cathode current collector and the anode current collector are the above described electrode current collectors, "the contact resistance of the cathode current collector and the anode current collector" refers to the resistance when the coating layer of one of the electrode current collector is made contact with the coating layer of the other electrode current collector. The contact resistance of the cathode current collector and the anode current collector under the pressure of 100 MPa is, for example, 0.5 Ω·cm² or more, and may be 1.1 Ω·cm² or more.

Also, one of the cathode current collector and the anode current collector may be the electrode current collector having a coating layer including a conductive material, a resin, and an inorganic filler, and the other may be a current collector including a Cu element. The coating layer including an inorganic filler and the current collector including a Cu element have high contact resistance, and thus the short circuit resistance may be increased as well.

### 2. Cathode active material layer

The cathode active material layer contains at least a cathode active material, and may further contain at least one of a solid electrolyte material, a conductive material, a binder, and a thickener, as required.

The cathode active material is not limited, and examples thereof may include oxide active materials. Examples of the oxide active material may include rock salt bed type active materials such as LiCoO₂, LiMnO₂, LiNiO₂, LiVO₂, and LiNi_{1/3}Co_{1/3}Mn_{1/3}O₂; spinel type active materials such as LiMn₂O₄, Li₄Ti₅O₁₂, and Li (Ni_{0.5}Mn_{1.5}) O₄; and olivine type active materials such as LiFePO₄, LiMnPO₄, LiNiPO₄, and LiCoPO₄. Also, as the oxide active material, a material such as a LiMn spinel active material represented by Li₁₊ₓMn_{2-x-y}M_{y}O₄ (M is at least one kind of Al, Mg, Co, Fe, Ni, and Zn; 0 < x + y < 2), and lithium titanate may be used.

Also, a coating layer including a Li ion conductive oxide may be formed on a surface of the cathode active material. The reason therefor is to inhibit the reaction of the cathode active material with the solid electrolyte material. Examples of the Li ion conductive oxide may include LiNbO₃, Li₄Ti₅O₁₂, and Li₃PO₄. The thickness of the coating layer is, for example, in a range of 0.1 nm to 100 nm, and may be in a range of 1 nm to 20 nm. The coverage of the coating layer on the surface of the cathode active material is, for example, 50% or more, and may be 80% or more.

There are no particular limitations on the solid electrolyte material, and examples thereof may include inorganic solid electrolyte materials such as sulfide solid electrolyte materials and oxide solid electrolyte materials. Examples of the sulfide solid electrolyte material may include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-Lii, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (provided that m and n is a positive number; Z is either one of Ge, Zn, and Ga), Li₂S-GeS₂, Li₂S-SiS₂-Li₃PO₄, and Li₂S-SiS₂-LiₓMO_{y} (provided that x and y is a positive number; M is either one of P, Si, Ge, B, Al, Ga, and In). Incidentally, the description "Li₂S-P₂S₅" signifies a sulfide solid electrolyte material comprising a raw material composition that contains Li₂S and P₂S₅, and the likewise applies to other descriptions.

In particular, the sulfide solid electrolyte material is preferably provided with an ion conductor that contains Li, A (A is at least one kind of P, Si, Ge, Al, and B), and S. Further, the ion conductor preferably has an anion structure of an ortho composition (PS₄³⁻ structure, SiS₄⁴⁻ structure, GeS₄⁴⁻ structure, AlS₃³⁻ structure, and BS₃³⁻ structure) as the main component of an anion. The reason therefor is to allow the sulfide solid electrolyte material to have high chemical stability. The proportion of the anion structure of an ortho composition with respect to all the anion structures in the ion conductor is, preferably 70 mol% or more, and more preferably 90 mol% or more. The proportion of the anion structure of an ortho composition may be determined by methods such as a Raman spectroscopy, NMR, and XPS.

The sulfide solid electrolyte material may contain a lithium halide in addition to the ion conductor. Examples of the lithium halide may include LiF, LiCl, LiBr, and LiI, and among them, LiCl, LiBr, and LiI are preferable. The proportion of LiX (X = I, Cl, or Br) in the sulfide solid electrolyte material is, for example, in a range of 5 mol% to 30 mol%, and may be in a range of 15 mol% to 25 mol%.

The solid electrolyte material may be a crystalline material, and may be an amorphous material. Also, the solid electrolyte material may be glass, and may be crystallized glass (glass ceramic). Examples of the shape of the solid electrolyte material may include a granular shape.

Examples of the conductive material may include carbon materials such as acetylene black (AB), Ketjen black (KB), carbon fiber, carbon nanotube (CNT), and carbon nanofiber (CNF). Also, examples of the binder may include rubber-based binders such as butylene rubber (BR) and styrene butadiene rubber (SBR); and fluorine-based binders such as polyvinylidene fluoride (PVdF).

Also, the thickness of the cathode active material layer is, for example, in a range of 0.1 µm to 300 µm, and may be in a range of 0.1 µm to 100 µm.

### 3. Anode active material layer

The anode active material layer contains at least an anode active material, and may further contain at least one of a solid electrolyte material, a conductive material, a binder, and a thickener, as required.

There are no particular limitations on the anode active material, and examples thereof may include metal active materials, carbon active materials, and oxide active materials. Examples of the metal active material may include a simple substance of metal and a metal alloy. Examples of the metal element included in the metal active material may include Si, Sn, In, and Al. The metal alloy is preferably an alloy that contains the metal element as the main component. Examples of the Si alloy may include a Si-Al-based alloy, a Si-Sn-based alloy, a Si-In-based alloy, a Si-Ag-based alloy, a Si-Pb-based alloy, a Si-Sb-based alloy, a Si-Bi-based alloy, a Si-Mg-based alloy, a Si-Ca-based alloy, a Si-Ge-based alloy, and a Si-Pb-based alloy. Incidentally, for example, the Si-Ca-based alloy signifies an alloy that contains at least Si and Al; it may be an alloy that contains only Si and Al, and may be an alloy that further contains an additional element thereto. Likewise applies to the alloys other than the Si-Al-based alloy. The metal alloy may be a two component alloy, and may be a multi component alloy of three components or more.

On the other hand, examples of the carbon active material may include methocarbon microbeads (MCMB), highly oriented pyrolytic graphite (HOPG), hard carbon, and soft carbon. Also, examples of the oxide active material may include a lithium titanate such as Li₄Ti₅O₁₂.

Examples of the shape of the anode active material may include a granular shape. The average particle size (D₅₀) of the anode active material is, for example, in a range of 10 nm to 50 µm, and may be in a range of 100 nm to 20 µm. The proportion of the anode active material in the anode active material layer is, for example, 50 weight% or more, and may be in a range of 60 weight% to 99 weight%.

The solid electrolyte material, the binder, and the thickener used in the anode active material layer are in the same contents as those described in "2. Cathode active material layer" above; thus, the descriptions herein are omitted. The thickness of the anode active material layer is, for example, in a range of 0.1 µm to 300 µm, and may be in a range of 0.1 µm to 100 µm.

### 4. Solid electrolyte layer

The solid electrolyte layer is a layer formed between the cathode active material layer and the anode current collector. Also, the solid electrolyte layer contains at least a solid electrolyte material, and may further contain a binder as required. The solid electrolyte material and the binder used in the solid electrolyte layer are in the same contents as those described in "2. Cathode active material layer" above; thus, the descriptions herein are omitted.

The content of the solid electrolyte material in the solid electrolyte layer is, for example, in a range of 10 weight% to 100 weight%, and may be in a range of 50 weight% to 100 weight%. Also, the thickness of the solid electrolyte layer is, for example, in a range of 0.1 µm to 300 µm, and may be in a range of 0.1 µm to 100 µm.

### 5. All-solid-state battery

The all-solid-state battery of the present disclosure is preferably an all solid lithium ion battery. Also, the all-solid-state battery may be a primary battery and may be a secondary battery, but preferably a secondary battery among them so as to be repeatedly charged and discharged, and be useful as a car-mounted battery, for example. Examples of the shape of the all-solid-state battery may include a coin shape, a laminate shape, a cylindrical shape, and a square shape.

The present disclosure may also provide a method for producing an all-solid-state battery, the method comprising a pressing step of arranging the electrode current collector described in "A. Electrode current collector" above and the cathode active material layer or the anode active material layer to be layered, and pressing the layered materials. There are no particular limitations on the pressing pressure; for example, it is 2 ton/cm² or more, and may be 4 ton/cm² or more.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Comparative Example 1]

### Production of cathode

A cathode active material (Li_{1.15}Ni_{1/3}Co_{1/3}Mn_{1/3}W_{0.005}O₂) was coated with LiNbO₃ in an atmospheric environment using a tumbling fluidized bed granulating-coating machine (from Powrex Corporation). After that, the product was burned in an atmospheric environment, and thus a coating layer including LiNbO₃ was formed on the surface of the cathode active material. Thereby, a cathode active material having a coating layer on its surface was obtained.

Next, added to a container made of polypropylene (PP) were butyl butyrate, butyl butyrate solution of 5 weight% that was a PVdF-based binder (from KUREHA CORPORATION), the obtained cathode active material, a sulfide solid electrolyte material (Li₂S-P₂S₅-based glass ceramic including LiI and LiBr; average particle size D₅₀ = 0.8 µm), and a conductive material (vapor-grown carbon fiber, VGCF, from SHOWA DENKO K.K), in the weight ratio of the cathode active material : the sulfide solid electrolyte material : the conductive material : the binder = 85 : 13 : 1 : 1. Next, the container made of PP was agitated for 30 seconds by an ultrasonic dispersion apparatus (UH-50 from SMT Corporation). Next, the container made of PP was shaken by a shaker (TTM-1 from SIBATA SCIENTIFIC TECHNOLOGY LTD.) for 3 minutes, and further agitated by the ultrasonic dispersion apparatus for 30 seconds to obtain a coating solution.

Next, an Al foil (15 µm thick, 1N30 from UACJ) was prepared. The obtained coating solution was shaken for 3 minutes by a shaker (TTM-1 from SIBATA SCIENTIFIC TECHNOLOGY LTD.), and then applied on the Al foil using an applicator by a blade method. The product was dried naturally, and then dried on a hot plate at 100°C for 30 minutes to form a cathode active material layer on one surface of the cathode current collector. Next, the product was cut according to the size of the battery, and thereby a cathode was obtained.

### Production of anode

Added to a container made of PP were butyl butyrate, butyl butyrate solution of 5 weight% that was a PVdF-based binder (from KUREHA CORPORATION), an anode active material (silicon from JAPAN PURE CHEMICAL CO., LTD., average particle size D₅₀ = 5 µm, a sulfide solid electrolyte material (Li₂S-P₂S₅-based glass ceramic including LiI and LiBr; average particle size D₅₀ = 0.8 µm), and a conductive material (vapor-grown carbon fiber, VGCF, from SHOWA DENKO K.K), in the weight ratio of the anode active material : the sulfide solid electrolyte material : the conductive material : the binder = 55 : 42 : 2 : 1. Next, the container made of PP was agitated for 30 seconds by an ultrasonic dispersion apparatus (UH-50 from SMT Corporation). Next, the container made of PP was shaken by a shaker (TTM-1 from SIBATA SCIENTIFIC TECHNOLOGY LTD.) for 30 minutes, and further agitated by the ultrasonic dispersion apparatus for 30 seconds to obtain a coating solution.

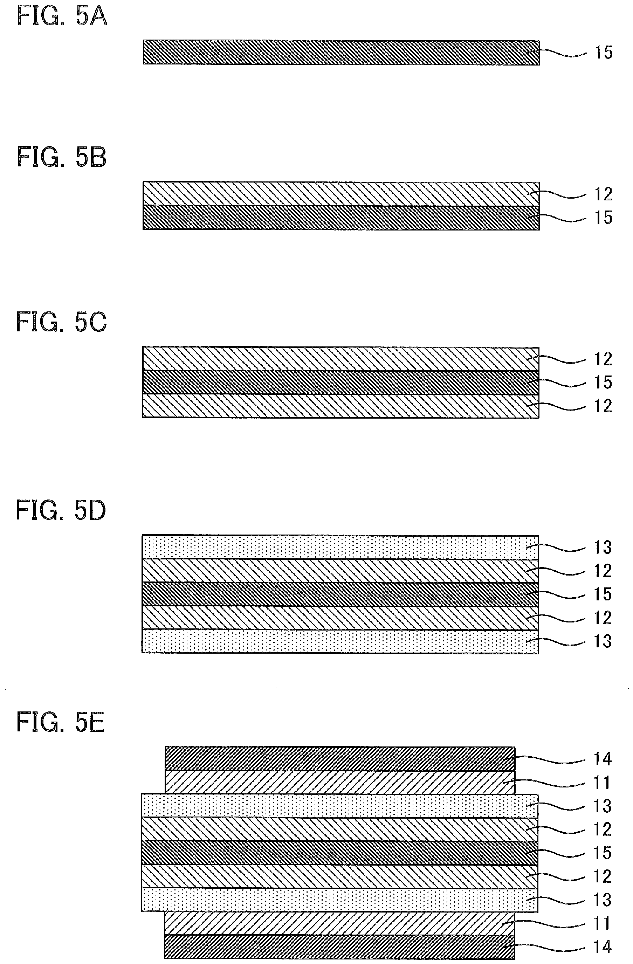

Next, as illustrated in FIG. 5A, a Cu foil (anode current collector 15, 12 µm thick, an electrolyte Cu foil from Furukawa Electric Co., Ltd.) was prepared. The obtained coating solution was shaken for 3 minutes by a shaker (TTM-1 from SIBATA SCIENTIFIC TECHNOLOGY LTD.), and then applied on the Cu foil using an applicator by a blade method. The product was dried naturally, and then dried on a hot plate at 100°C for 30 minutes. Thereby, as illustrated in FIG. 5B, anode active material layer 12 was formed on one surface of the Cu foil (anode current collector 15). After that, as illustrated in FIG. 5C, the treatment in the same manner was conducted to form anode active material layer 12 on the other surface of the Cu foil, thus anode active material layer 12 was formed on the both surfaces of the Cu foil (anode current collector 15). Next, the product was cut according to the size of the battery, and thereby an anode was obtained.

### Production of solid electrolyte layer

Added to a container made of PP were heptane, 5 weight% of heptane solution that was a butylene rubber-based binder (from JSR Corporation), and a sulfide solid electrolyte material (Li₂S-P₂S₅-based glass ceramic including LiI and LiBr, average particle size D₅₀ = 2.5 µm). Next, the container made of PP was agitated for 30 seconds by an ultrasonic dispersion apparatus (UH-50 from SMT Corporation). Next, the container made of PP was shaken for 30 minutes by a shaker (TTM-1 from SIBATA SCIENTIFIC TECHNOLOGY LTD.), and further agitated for 30 seconds by the ultrasonic dispersion apparatus, and thereby a coating solution was obtained.

Next, an Al foil (from Nippon Foil Mfg. Co., Ltd.) was prepared. The obtained coating solution was shaken for 3 minutes by a shaker (TTM-1 from SIBATA SCIENTIFIC TECHNOLOGY LTD.), and then applied on the Al foil using an applicator by a blade method. The product was dried naturally, and then dried on a hot plate at 100°C for 30 minutes. Next, the product was cut according to the size of the battery, and thereby a transferring member having the Al foil and a solid electrolyte layer was obtained.

### Production of evaluation battery

Two of the obtained transferring member was respectively placed on the anode active material layer formed on the both surfaces of the anode current collector, and pressed at the pressure of 4 ton/cm² by a cold isostatic pressing method (CIP method). After that, the Al foil of the transferring member was peeled off. Thereby, as shown in FIG. 5D, solid electrolyte layer 13 was formed on anode active material layer 12. Next, two of the obtained cathodes as described above was respectively placed on the solid electrolyte layer formed on the both surfaces of the anode current collector, and pressed at the pressure of 4 ton/cm² by a cold isostatic pressing method (CIP method). Thereby, as shown in FIG. 5E, cathode active material layer 11 and cathode current collector 14 were formed on solid electrolyte layer 13. After that, the product was confined at 10 MPa, and thereby an evaluation battery (2-stacked battery) was obtained.

### [Comparative Example 2]

Boehmite treatment, in which an Al foil (15 µm thick, 1N30 from UACJ Corporation) was soaked in an alkali solution at 100°C for 20 seconds, was conducted. Thereby, a cathode current collector having an aluminum oxide layer (resistive layer) on the surface of the Al foil (current collecting layer) was obtained. An evaluation battery was obtained in the same manner as in Comparative Example 1 except that the obtained cathode current collector was used.

### [Comparative Example 3]

An evaluation battery was obtained in the same manner as in Comparative Example 2 except that the treatment time of the boehmite treatment was changed to 40 seconds.

### [Comparative Example 4]

An evaluation battery was obtained in the same manner as in Comparative Example 2 except that the treatment time of the boehmite treatment was changed to 80 seconds.

### [Comparative Example 5]

A coating layer was formed on the surface of the Al foil (15 µm thick, 1N30 from UACJ Corporation) without conducting the boehmite treatment. First, a paste was produced by mixing a conductive material (furnace black, average primary particle radius of 66 nm, from Tokai Carbon Co., Ltd.), an inorganic filler (alumina, CB-P02 from SHOWA DENKO K.K), and PVDF (KF polymer L#9130 from KUREHA CORPORATION) in the volume ratio of the conductive material : the inorganic filler : PVDF = 10 : 60 : 30, with N-methylpyrrolidone (NMP). The obtained paste was applied on an Al foil (15 µm thick, 1N30 from UACJ Corporation) so that the thickness after drying the product became 10 µm. The product was dried in a drying furnace to form a coating layer. Thereby, a cathode current collector having a coating layer on the surface of the Al foil (current collecting layer) was obtained. The electron conductivity of the coating layer at 25°C was approximately 3.8 × 10⁻² S/cm. Also, an evaluation battery was obtained in the same manner as in Comparative Example 1 except that the obtained cathode current collector was used.

### [Example 1]

An aluminum oxide layer (resistive layer) was formed on the surface of an Al foil (current collecting layer) in the same manner as in Comparative Example 2. After that, a coating layer was formed on the surface of the aluminum oxide layer by the same method as in Comparative Example 5. Thereby, a cathode current collector having the Al foil (current collecting layer), the aluminum oxide layer (resistive layer), and the coating layer in this order, was obtained. An evaluation battery was obtained in the same manner as in Comparative Example 1 except that the obtained cathode current collector was used.

### [Example 2]

An evaluation battery was obtained in the same manner as in Example 1 except that an aluminum oxide layer (resistive layer) was formed on the surface of the Al foil (current collecting layer) in the same manner as in Comparative Example 3.

### [Example 3]

An evaluation battery was obtained in the same manner as in Example 1 except that an aluminum oxide layer (resistive layer) was formed on the surface of the Al foil (current collecting layer) in the same manner as in Comparative Example 4.

### [Evaluation]

### Observation of resistive layer

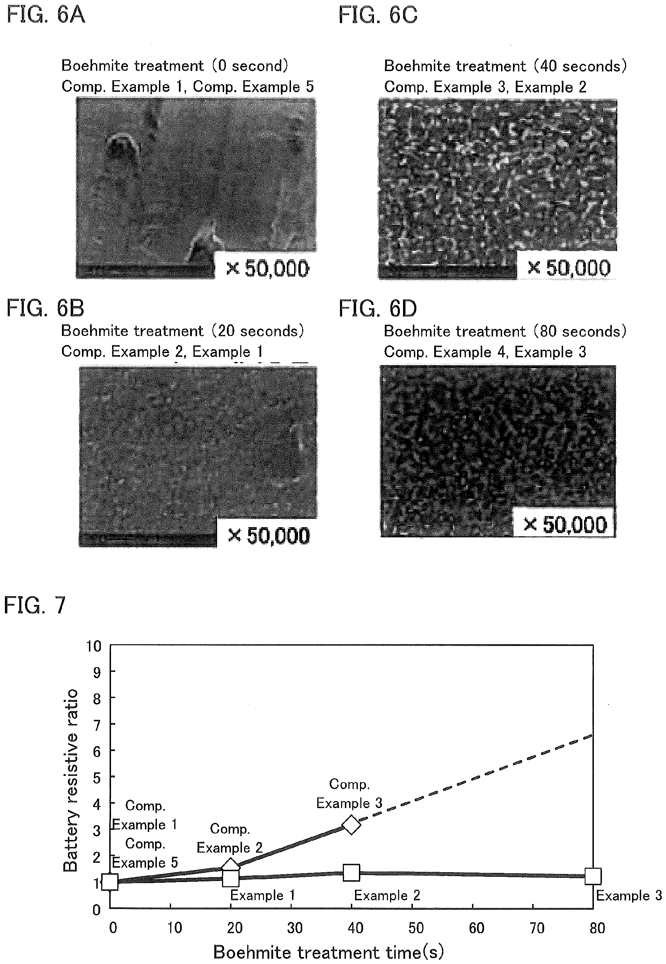

The surfaces of the Al foils used in Comparative Examples 1 to 5 and Examples 1 to 3 were observed by a scanning electron microscope (SEM). The results are shown in FIGS. 6A to 6D. As shown in FIGS. 6A to 6D, needle-shaped structures were formed by the boehmite treatment, and it was confirmed that the surface roughness of the aluminum oxide layer became larger as the treatment time was longer. Also, the thickness of the aluminum oxide layer was measured from the results of the cross-section observation of the Al foil. Meanwhile, the surface roughness of the aluminum oxide layer was measured using an atomic force microscope. The results are shown in Table 1. As shown in Table 1, it was confirmed that the both of the thickness and the surface roughness of the aluminum oxide layer became larger as the treatment time was longer.

### Battery resistance measurement

The battery resistance of the evaluation batteries obtained in Comparative Examples 1 to 5 and Examples 1 to 3 was measured. A cycle testing machine (from NITTETSU ELEX CO., LTD. ver8.00) was used for the battery resistance measurement. The result is shown in Table 1 and FIG. 7. Incidentally, the values of the battery resistance in Table 1 and FIG. 7 are the relative values when the battery resistance of Comparative Example 1 is determined as 1.

As shown in Table 1 and FIG. 7, in Comparative Examples 1 to 4, the battery resistance during the normal use of the battery became larger as the thickness of the resistive layer (aluminum oxide layer) was larger. On the other hand, the battery resistance of Examples 1 to 3 was maintained to be almost equal to that of Comparative Example 5, and the battery resistance during the normal use of the battery was small.

### Short circuit resistance measurement

Short circuit resistance of the evaluation batteries obtained in Comparative Examples 1 to 5 and Examples 1 to 3 was measured. In the short circuit resistance measurement, the evaluation battery was respectively placed on an Al plate of 3 mm thickness, and a needle penetration test was conducted in the following conditions:
Charge state: fully charged
Resistance meter: RM3542 from HIOKI E.E. CORPORATION
Nail: SK material (φ 8 mm, point angle 60°)
Nail speed: 0.5 mm/sec.

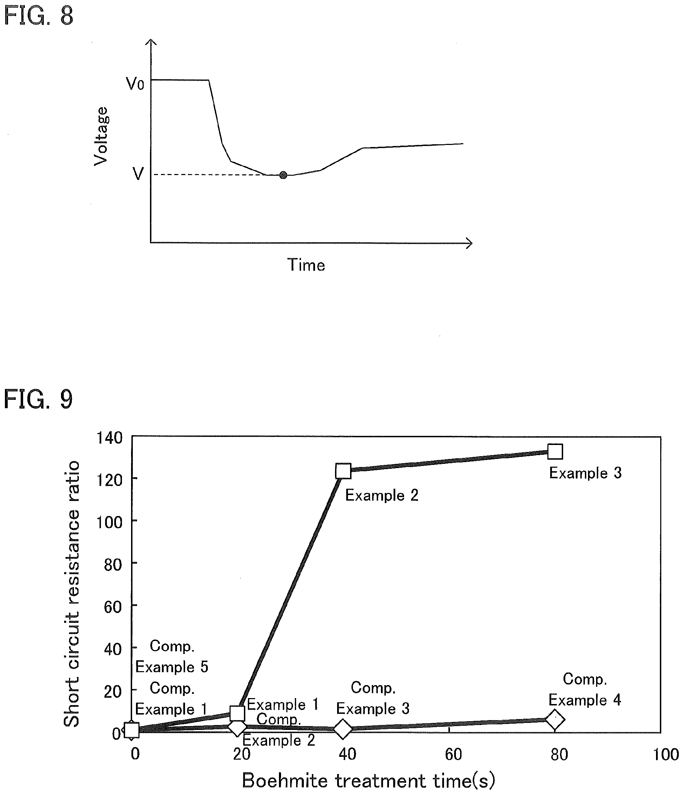

The short circuit resistance of the evaluation battery was determined from the voltage profile during the nail penetration. An example of the voltage profile is shown in FIG. 8. As shown in FIG. 8, the voltage of the evaluation battery falls during the nail penetration. Here, the initial voltage is regarded as V₀, and the minimum voltage during nail penetration is regarded as V. Also, the internal resistance of the evaluation battery was measured in advanced, and the internal resistance is regarded as r. Also, the short circuit resistance of the evaluation battery is regarded as R. When all the current caused by the voltage fall during the nail penetration is presumed to be short circuit current, the relation of V/R = (V₀ - V)/r is satisfied. From this relation, short circuit resistance R of the evaluation battery was calculated. The results are shown in Table 1 and FIG.9. Incidentally, the values of the short circuit resistance in Table 1 and FIG. 9 are the relative values when the short circuit resistance of Comparative Example 1 is determined as 1.

As shown in Table 1 and FIG. 9, it was confirmed that the short circuit resistance of Examples 1 to 3 was larger than that of Comparative Examples 2 to 4. The reason therefor is presumed that the contact resistance of the cathode current collector with the anode current collector (Cu foil) became larger since the cathode current collector included both the resistive layer (aluminum oxide layer) and the coating layer in which the ratio of the conductive material (carbon material) was small. In particular, the short circuit resistance of Examples 2 and 3 was remarkably larger than that of Example 1.

**[Table 1]**

| | Boehmite treatment | | | Coating layer | Battery resistance ratio | Short circuit resistance ratio |
|---|---|---|---|---|---|---|
| | Treatment time [second] | Thickness of oxide layer [nm] | Surface roughness [nm] | | | |
| Comparative Example 1 | 0 | 0 | 10 | None | 1 | 1 |
| Comparative Example 2 | 20 | 30 | 20 | None | 1.55 | 2.65 |
| Comparative Example 3 | 40 | 70 | 30 | None | 3.18 | 1.64 |
| Comparative Example 4 | 80 | 200 | 50 | None | Not measurable | 6.31 |
| Comparative Example 5 | 0 | 0 | 10 | Present | 1.00 | 1.63 |
| Example 1 | 20 | 30 | 20 | Present | 1.13 | 8.97 |
| Example 2 | 40 | 70 | 30 | Present | 1.36 | 123 |
| Example 3 | 80 | 200 | 50 | Present | 1.25 | 133 |

### Contact resistance measurement

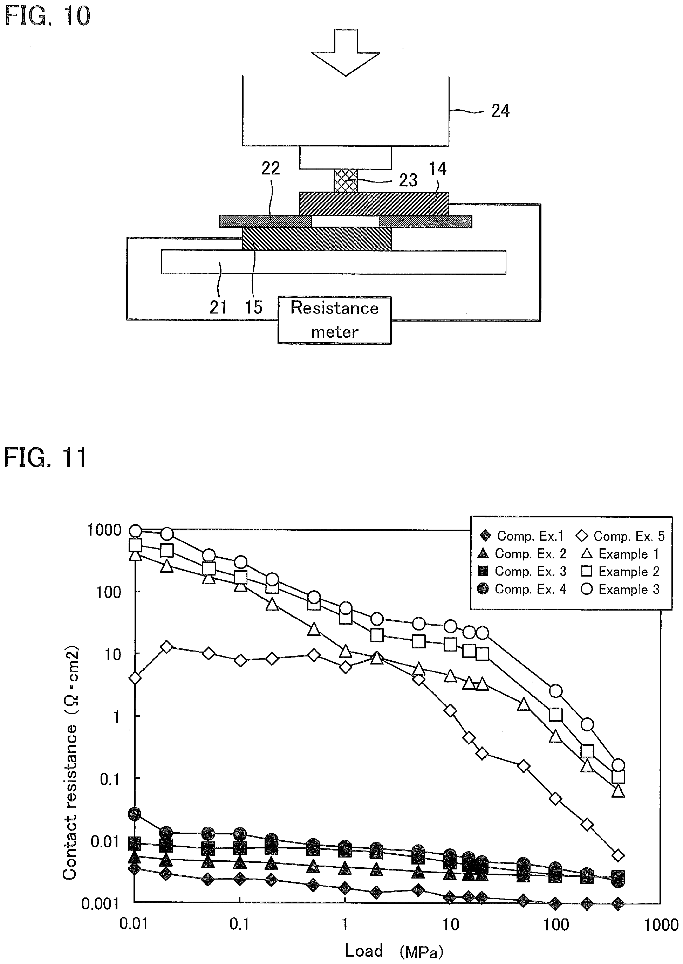

The contact resistance of the cathode current collector and the anode current collector used in Comparative Examples 1 to 5 and Examples 1 to 3 was measured. In specific, as shown in FIG. 10, anode current collector 15 was arranged on bakelite plate 21, kapton film 22 having a through hole section was placed on anode current collector 15, and cathode current collector 14 was placed on kapton film 22 so that the coating layer (not illustrated) faced to anode current collector 15 side. Further, SK material block 23 of φ 11.28 mm was placed on cathode current collector 14 so as to overlap the through hole section of kapton film 22 in the planner view. In this state, the resistance value was measured by a resistance meter (RM3542 from HIOKI E.E. CORPORATION) while the pressure applied thereto was changed by autograph 24. The result is shown in FIG. 11.

As shown in FIG. 11, in the comparison of Comparative Examples 1 to 4, it was confirmed that the contact resistance was increased by taking longer time for the boehmite treatment (by setting the thickness of the aluminum oxide layer larger). Meanwhile, the contact resistance of Comparative Examples 1 to 4 in a high pressure state (such as in the state of 100 MPa) was small. On the other hand, in the comparison of Comparative Example 1 with Comparative Example 5, it was confirmed that the contact resistance tended to increase significantly when the coating layer was arranged. The tendency in the same manner was also confirmed in Comparative Examples 2 to 4 and Examples 1 to 3. Further, in the comparison of Examples 1 to 3, it was confirmed that the contact resistance was increased by taking longer time for the boehmite treatment (by setting the thickness of the aluminum oxide layer larger). In particular, in Examples 1 to 3, a large contact resistance was maintained even in a high pressure state (such as in the state of 100 MPa). Incidentally, the contact resistance values of Comparative Example 5 and Examples 1 to 3 when the load was 100 MPa were shown in Table 2.

**[Table 2]**

| | Contact resistance [Ω·cm²] 100 MPa |
|---|---|
| Comparative Example 5 | 0.049 |
| Example 1 | 0.50 |
| Example 2 | 1.10 |
| Example 3 | 2.65 |

### Reference Signs List

- 1: current collecting layer
- 2: resistive layer
- 3: coating layer
- 10: electrode current collector
- 11: cathode active material layer
- 12: anode active material layer
- 13: solid electrolyte layer
- 14: cathode current collector
- 15: anode current collector
- 100: all-solid-state battery
- 110: nail

## Claims

1. An electrode current collector (10) to be used in an all-solid-state battery (100), the electrode current collector comprising:
a current collecting layer (1), a resistive layer (2), and a coating layer (3) in this order;
an electron conductivity of the coating layer (3) is 2 × 10⁻² S/cm or more;
the resistive layer (2) includes an opening (X); and
the current collecting layer (1) contacts with the coating layer (3) in the opening (X).

2. The electrode current collector (10) according to claim 1, **characterized in that** a thickness of the resistive layer (2) is in a range of 10 nm to 1000 nm.

3. The electrode current collector (10) according to claim 1 or 2, **characterized in that** the coating layer (3) contains a carbon material as a conductive material.

4. The electrode current collector (10) according to claim 3, **characterized in that** the coating layer (3) further contains a resin and an inorganic filler.

5. The electrode current collector (10) according to claim 3 or 4, **characterized in that** a proportion of the conductive material in the coating layer (3) is 30 weight% or less.

6. The electrode current collector (10) according to any one of claims 1 to 5, **characterized in that** a thickness of the coating layer (3) is larger than a thickness of the resistive layer (2) .

7. The electrode current collector (10) according to any one of claims 1 to 6, **characterized in that** the resistive layer (2) contains a metal oxide.

8. The electrode current collector (10) according to any one of claims 1 to 7, **characterized in that** the resistive layer (2) and the current collecting layer (1) contain a same metal element.

9. The electrode current collector (10) according to any one of claims 1 to 8, **characterized in that** the current collecting layer (1) contains an Al element.

10. An all-solid-state battery (100) comprising: a cathode current collector (14), a cathode active material layer (11), a solid electrolyte layer (13), an anode active material layer (12), and an anode current collector (15) in this order;
**characterized in that** at least one of the cathode current collector (14) and the anode current collector (15) is the electrode current collector according to any one of claims 1 to 9.

## Patentansprüche

1. Elektrodenstromkollektor (10), der in einer Feststoffbatterie (100) verwendet werden soll, wobei der Elektrodenstromkollektor Folgendes umfasst:
eine Stromsammelschicht (1), eine Widerstandsschicht (2) und eine Beschichtungsschicht (3) in dieser Reihenfolge;
eine Elektronenleitfähigkeit der Beschichtungsschicht (3) ist 2 × 10⁻² S/cm oder mehr;
die Widerstandsschicht (2) beinhaltet eine Öffnung (X); und
die Stromsammelschicht (1) steht in Kontakt mit der Beschichtungsschicht (3) in der Öffnung (X).

2. Elektrodenstromkollektor (10) nach Anspruch 1, **dadurch gekennzeichnet, dass** eine Dicke der Widerstandsschicht (2) in einem Bereich von 10 nm bis 1000 nm ist.

3. Elektrodenstromkollektor (10) nach Anspruch 1 oder 2, **dadurch gekennzeichnet, dass** die Beschichtungsschicht (3) ein Kohlenstoffmaterial als ein leitfähiges Material enthält.

4. Elektrodenstromkollektor (10) nach Anspruch 3, **dadurch gekennzeichnet, dass** die Beschichtungsschicht (3) ferner ein Harz und einen anorganischen Füllstoff enthält.

5. Elektrodenstromkollektor (10) nach Anspruch 3 oder 4, **dadurch gekennzeichnet, dass** ein Anteil des leitfähigen Materials in der Beschichtungsschicht (3) 30 Gew.-% oder weniger ist.

6. Elektrodenstromkollektor (10) nach einem der Ansprüche 1 bis 5, **dadurch gekennzeichnet, dass** eine Dicke der Beschichtungsschicht (3) größer als eine Dicke der Widerstandsschicht (2) ist.

7. Elektrodenstromkollektor (10) nach einem der Ansprüche 1 bis 6, **dadurch gekennzeichnet, dass** die Widerstandsschicht (2) ein Metalloxid enthält.

8. Elektrodenstromkollektor (10) nach einem der Ansprüche 1 bis 7, **dadurch gekennzeichnet, dass** die Widerstandsschicht (2) und die Stromsammelschicht (1) ein gleiches Metallelement enthalten.

9. Elektrodenstromkollektor (10) nach einem der Ansprüche 1 bis 8, **dadurch gekennzeichnet, dass** die Stromsammelschicht (1) ein Al-Element enthält.

10. Feststoffbatterie (100), umfassend: einen Kathodenstromkollektor (14), eine Kathodenaktivmaterialschicht (11), eine Festelektrolytschicht (13), eine Anodenaktivmaterialschicht (12) und einen Anodenstromkollektor (15) in dieser Reihenfolge;
**dadurch gekennzeichnet, dass** mindestens einer von dem Kathodenstromkollektor (14) und dem Anodenstromkollektor (15) der Elektrodenstromkollektor nach einem der Ansprüche 1 bis 9 ist.

## Revendications

1. Collecteur de courant d'électrode (10) devant être utilisée dans une batterie entièrement solide (100), le collecteur de courant d'électrode comprenant :
une couche collectrice de courant (1), une couche résistive (2) et une couche de revêtement (3) dans cet ordre ;
une conductivité électronique de la couche de revêtement (3) étant de 2 x 10⁻² S/cm ou plus ;
la couche résistive (2) comprenant une ouverture (X) ; et
la couche collectrice de courant (1) entrant en contact avec la couche de revêtement (3) dans l'ouverture (X).

2. Collecteur de courant d'électrode (10) selon la revendication 1, **caractérisé en ce qu'**une épaisseur de la couche résistive (2) se situe dans une plage de 10 nm à 1000 nm.

3. Collecteur de courant d'électrode (10) selon la revendication 1 ou 2, **caractérisé en ce que** la couche de revêtement (3) contient un matériau de carbone en tant que matériau conducteur.

4. Collecteur de courant d'électrode (10) selon la revendication 3, **caractérisé en ce que** la couche de revêtement (3) contient en outre une résine et une charge inorganique.

5. Collecteur de courant d'électrode (10) selon la revendication 3 ou 4, **caractérisé en ce qu'**une proportion du matériau conducteur dans la couche de revêtement (3) est de 30 % en poids ou moins.

6. Collecteur de courant d'électrode (10) selon l'une quelconque des revendications 1 à 5, **caractérisé en ce qu'**une épaisseur de la couche de revêtement (3) est supérieure à une épaisseur de la couche résistive (2).

7. Collecteur de courant d'électrode (10) selon l'une quelconque des revendications 1 à 6, **caractérisé en ce que** la couche résistive (2) contient un oxyde métallique.

8. Collecteur de courant d'électrode (10) selon l'une quelconque des revendications 1 à 7, **caractérisé en ce que** la couche résistive (2) et la couche collectrice de courant (1) contiennent un même élément métallique.

9. Collecteur de courant d'électrode (10) selon l'une quelconque des revendications 1 à 8, **caractérisé en ce que** la couche collectrice de courant (1) contient un élément Al.

10. Batterie entièrement solide (100) comprenant : un collecteur de courant de cathode (14), une couche de matériau actif de cathode (11), une couche d'électrolyte solide (13), une couche de matériau actif d'anode (12) et un collecteur de courant d'anode (15) dans cet ordre ;
**caractérisé en ce que** le collecteur de courant de cathode (14) et/ou le collecteur de courant d'anode (15) constituent le collecteur de courant d'électrode selon l'une quelconque des revendications 1 à 9.
